# EUROPÄISCHE PATENTSCHRIFT

(11) **EP 3 444 156 B1**
(45) Veröffentlichungstag und Bekanntmachung des Hinweises auf die Patenterteilung: **08.12.2021**
(21) Anmeldenummer: 18197582.2
(22) Anmeldetag: 24.10.2014
(51) Int. Cl.: B60T 13/74, F16D 65/18

(54) **KRAFTFAHRZEUGBREMSE MIT SELBSTHEMMUNGSVORRICHTUNG**
MOTOR VEHICLE BRAKE WITH SELF-LOCKING DEVICE
FREIN DE VÉHICULE AUTOMOBILE AVEC DISPOSITIF DE BLOCAGE AUTOMATIQUE

(30) Priorität: 12.11.2013 DE 102013018946
(43) Veröffentlichungstag der Anmeldung: 20.02.2019
(62) Teilanmeldung aus: 14787200.6
(73) Patentinhaber: ZF Active Safety GmbH, 56070 Koblenz (DE)
(72) Erfinder: Poertzgen, Gregor, 56068 Koblenz (DE); Scherer, Steve, 56414 Bilkheim (DE); Dilla, Christian, 56170 Bendorf (DE); Ohlig, Benedikt, 56179 Vallendar (DE); Michels, Erwin, 56829 Kail (DE)
(74) Vertreter: ZF Friedrichshafen AG

(56) Entgegenhaltungen:
- CN-A- 102 678 887
- DE-A1- 10 349 078
- DE-A1- 19 654 729
- DE-A1-102011 102 860
- US-A- 5 829 845

## Beschreibung

Die Erfindung betrifft eine elektromechanisch und hydraulisch betätigbare Kraftfahrzeugbremse mit einer Aktuatorbaugruppe umfassend:
- ein Gehäuse,
- ein relativ zu dem Gehäuse verlagerbares Stellglied zum hydraulischen oder elektromechanischen Verlagern eines Bremsbelags,
- einen motorischen Antrieb,
- eine zwischen dem motorischen Antrieb und dem verlagerbaren Stellglied angeordnete Verlagerungsmechanik,
- eine der Verlagerungsmechanik zugeordnete Getriebeanordnung, und
- eine separate Selbsthemmungsvorrichtung, die dazu ausgebildet ist, die Verlagerungsmechanik bei Bedarf zu blockieren,
wobei die Verlagerungsmechanik einen Kugelgewindetrieb mit einer Spindel und einer Mutter aufweist, wobei wahlweise eine Komponente von Spindel und Mutter drehantreibbar ist und die jeweils andere Komponente von Spindel und Mutter zur Verlagerung des Stellglieds durch Drehantreiben der einen Komponente von Spindel und Mutter innerhalb des Gehäuses linear verlagerbar ist, und wobei die Getriebeanordnung wenigstens zwei Getriebestufen aufweist.

Seit geraumer Zeit werden Kraftfahrzeugbremsen eingesetzt, bei denen im Falle einer normalen Betriebsbremsung während der Fahrt des Fahrzeugs die Bremsbeläge in gewohnter Weise hydraulisch verlagert werden, bei denen aber auch zur Aktivierung einer Feststellbremsfunktion eine elektromechanische Verlagerung der Bremsbeläge oder zumindest ein elektromechanisch ausgelöstes Blockieren der Bremsbeläge in einer Bremsstellung erfolgt. Derartige Kraftfahrzeugbremsen bieten den Vorteil, dass die Feststellbremsfunktion komfortabler durch einfaches Betätigen eines Aktivierungsschalters aktiviert oder gelöst werden kann.

Derartige elektromechanisch und hydraulisch betätigbare Kraftfahrzeugbremsen sind aus dem Stand der Technik bekannt.

So beschreibt das Dokument WO 2008/037738 A1 eine sowohl hydraulisch als auch elektromechanisch betätigbare Kraftfahrzeugbremse. In einer Normalbetriebssituation, das heißt während der Fahrt des Kraftfahrzeugs, wird diese Kraftfahrzeugbremse in üblicher Weise hydraulisch betätigt. Zur Aktivierung einer Feststellbremse wird allerdings die elektromechanische Betätigungsfunktion aktiviert. Dabei wird ein Elektromotor angesteuert, der über eine Verlagerungsmechanik mit einer Getriebeanordnung eine Spindel-Mutter-Anordnung antreibt. Die Getriebeanordnung ist mit einem Schneckenradgetriebe selbsthemmend ausgebildet, um zu verhindern, dass sich bei aktivierter Feststellbremse die Feststellbremswirkung reduziert. Die Selbsthemmung hat aber den Nachteil, dass nur sehr geringe Wirkungsgrade erreicht werden können, so dass die Komponenten, insbesondere den Elektromotor relativ stark ausgelegt werden müssen und eine hohe Stromaufnahme haben. Es gilt, dass sich der gesamte Wirkungsgrad des Systems aus einem Produkt der Einzelwirkungsgrade der Komponenten zusammensetzt. So ergibt sich dieser Gesamtwirkungsgrad beispielsweise aus dem Produkt des Wirkungsgrads des Motors, des Wirkungsgrads der nachgeschalteten Getriebeanordnung und der Spindel-Mutter-Anordnung. Bei Getriebeanordnungen mit Selbsthemmungseffekt lassen sich so nur Gesamtwirkungsgrade im Bereich von 30 % und weniger erreichen.

Das Dokument DE 10 2012 208 294 A1 beschreibt eine Fahrzeugbremse, bei der eine separate Selbsthemmungsvorrichtung unmittelbar an der Mutter-Spindelanordnung angeordnet ist. Insbesondere wird auf die Fig. 8 dieses Dokuments verwiesen. Dort ist gezeigt, dass die als Kupplungsvorrichtung 41 bezeichnete Selbsthemmungsvorrichtung zwischen dem Wälzkörperrampengetriebe und den Bremskolben angeordnet ist. Eine solche unmittelbare räumliche Zuordnung der Selbsthemmungsvorrichtung zu der Mutter-Spindelanordnung eines Kugelgewindetrieb hat den Nachteil, dass die bei der Aktivierung der Bremse und bei der Aufrechterhaltung eines (Feststell-) Bremszustand auftretenden Reaktionskräfte von der Selbsthemmungsvorrichtung in voller Größe getragen werden müssen. Die Selbsthemmungsvorrichtung ist dementsprechend massiv auszuführen, was zur Folge hat, dass sie erheblichen Bauraum einnimmt. Dies führt dazu, dass die Bremse insbesondere in axialer Richtung bezüglich der Gewindespindel verhältnismäßig groß zu dimensionieren ist.

Ferner zeigt das Dokument DE 10 2011 102 860 A1 eine gegenüber diesem Stand der Technik verbesserte Fahrzeugbremse, bei der die Selbsthemmungsvorrichtung zwar nahe der Mutter-Spindelanordnung angeordnet ist, jedoch in die Getriebeanordnung integriert ist, so dass Bauraum in axialer Richtung bezüglich der Gewindespindel eingespart werden kann. Diese Bremse lässt sich kompakter ausgestalten.

Das Dokument DE 196 54 729 A1 beschreibt eine Bremsvorrichtung mit einem Elektro-Betriebsmotor, einem Zahnradgetriebe, einem Spindeltrieb und einem Rampenmechanismus.

Das Dokument DE 103 49 078 A1 beschreibt eine Reibungsbremse mit einem Elektromotor, einem Zahnradgetriebe und einem Stellgliedantrieb mit Rinnen abnehmender Tiefe als Keil- oder Rampenflächen.

Es ist Aufgabe der vorliegenden Erfindung, eine Kraftfahrzeugbremse bereitzustellen, die sich sowohl als Betriebsbremse als auch als Feststellbremse nutzen lässt und die hinsichtlich des Kraftflusses und der Dimensionierung gegenüber dem Stand der Technik weiter optimiert ist.

Diese Aufgabe wird durch eine Kraftfahrzeugbremse der eingangs bezeichneten Art mit den Merkmalen des unabhängigen Patentanspruchs gelöst, wobei vorgesehen ist, dass die Selbsthemmungsvorrichtung derart in oder an der Getriebeanordnung angeordnet ist, dass wenigstens zwei Getriebestufen zwischen dem Kugelgewindetrieb und der Selbsthemmungsvorrichtung angeordnet sind.

Die Erfindung hat den Vorteil, dass die wenigstens zwei Getriebestufen mit ihrer Übersetzung bzw. Untersetzung dazu ausgenutzt werden können, um die von den Bremsbelägen herrührenden Reaktionskräfte zu reduzieren, so dass die Selbsthemmungsvorrichtung kleiner dimensioniert werden kann. Darüber hinaus gibt die erfindungsgemäße Anordnung der Selbsthemmungsvorrichtung im Abstand von der Gewindespindel mehr Freiheiten, um die gesamte Kraftfahrzeugbremse kleiner zu dimensionieren, da die Selbsthemmungsvorrichtung an einer Stelle angeordnet werden kann, wo sie weniger Bauraum fordert.

Ein weiterer Vorteil der Erfindung besteht darin, dass der Gesamtwirkungsgrad der Fahrzeugbremse gegenüber dem Stand der Technik verbessert werden kann, insbesondere deshalb, weil die Getriebeanordnung oder der Kugelgewindetrieb selbst nicht mehr selbsthemmend ausgeführt werden müssen. Somit lassen sich für die Kraftübertragung Wirkungsgrade von deutlich über 50 % erreichen, was ebenfalls dazu beiträgt, dass der motorische Antrieb mit geringerer Stromaufnahme, schwächer und damit auch kleiner bauend ausgelegt werden kann.

Eine bevorzugte Ausführungsform der Erfindung sieht vor, dass die Getriebeanordnung drei oder vier Getriebestufen aufweist. Die Wahl von drei oder vier Getriebestufen ermöglicht es, zu Gunsten einer relativ kleinen Dimensionierung des motorischen Antriebs ein verhältnismäßig großes Übersetzungsverhältnis zu erzielen, wobei dennoch die Verlagerungsmechanik relativ kompakt ausgebildet werden kann. Diese Anzahl von Getriebestufen erlaubt auch eine günstige Positionierung der Selbsthemmungsvorrichtung.

In diesem Zusammenhang kann gemäß einer Ausführungsvariante der Erfindung vorgesehen sein, dass die Selbsthemmungsvorrichtung zwischen dem motorischen Antrieb und der Getriebeanordnung angeordnet ist. Dies bedeutet, dass die gesamte Getriebeanordnung mit sämtlichen Getriebestufen zur Untersetzung der von den Bremsbelägen herrührenden Reaktionskräfte ausgenutzt wird. Dementsprechend kann die Selbsthemmungsvorrichtung sehr schwach und bauraumsparend dimensioniert werden und erfüllt dennoch zuverlässige ihre Wirkung.

Nahezu ähnlich gute Effekte lassen sich bei einer Abwandlung dieser Ausführungsvariante erzielen, bei der vorgesehen ist, dass die Selbsthemmungsvorrichtung der dem motorischen Antrieb nächsten Getriebestufe der Getriebeanordnung nachgeschaltet ist. Bei dieser Ausführungsvariante ist die Selbsthemmungsvorrichtung in die Getriebeanordnung integrierbar und nutzt bis auf die antriebsseitige Getriebestufe sämtliche anderen Getriebestufen zu Untersetzung der von den Bremsbelägen im Bremszustand ausgeübten Reaktionskräfte aus.

Vorzugsweise ist erfindungsgemäß vorgesehen, dass die Selbsthemmungsvorrichtung derart angeordnet ist, dass die beim Blockieren der Verlagerungsmechanik auftretenden Reaktionskräfte mittelbar oder unmittelbar in das Gehäuse ableitbar sind. Eine Weiterbildung der Erfindung sieht in diesem Zusammenhang vor, dass die Selbsthemmungsvorrichtung die beim Blockieren der Verlagerungsmechanik auftretenden Reaktionskräfte in einen der Getriebeanordnung zugeordneten Gehäuseabschnitt ableitet, wobei dieser Gehäuseabschnitt kraftübertragend mit einem die Bremsbelaganordnung tragenden Gehäuseabschnitt verbunden ist. Der die Bremsbelaganordnung tragende Gehäuseabschnitt ist in der Regel etwas massiver ausgebildet, was Aufnahme der Reaktionskräfte von der Selbsthemmungsvorrichtung vorteilhaft ist. Ferner kann vorgesehen sein, dass die Selbsthemmungsvorrichtung die beim Blockieren der Verlagerungsmechanik auftretenden Reaktionskräfte direkt in den massiveren die Bremsbelaganordnung tragenden Gehäuseabschnitt verbunden ist.

Eine bevorzugte Ausführungsvariante der Erfindung sieht vor, dass die Selbsthemmungsvorrichtung mit einer Schlingfederkupplung ausgebildet ist, die eine Drehmomentübertragung von dem motorischen Antrieb zu der Spindel zulässt und zum Blockieren einer Drehmomentübertragung von der Spindel zum motorischen Antrieb ausgebildet ist. Mit einer solchen Schlingfederkupplung lassen sich hohe Wirkungsgradverluste vermeiden, da die Schlingfederkupplung in ihrem gelösten Zustand eine weit gehend direkte und nahezu verlustfreie Übertragung zulässt, im geschlossenen Zustand jedoch zuverlässig blockiert. In diesem Zusammenhang kann erfindungsgemäß vorgesehen sein, dass der Schlingfederkupplung ein Schaltelement zugeordnet ist, welches in einer ersten Schaltstellung eine Drehmomentübertragung von der Spindel zu dem motorischen Antrieb zulässt und bei Erreichen einer zweiten Schaltstellung die Schlingfederkupplung dazu veranlasst, eine Drehmomentübertragung von der Spindel zu dem motorischen Antrieb zu blockieren. Ein solches Schaltelement kann beispielsweise eine meanderförmige Feder sein.

In diesem Zusammenhang kann ferner vorgesehen sein, dass die Schlingfederkupplung als Schlingfeder eine um einen gehäusefesten Stator mit wenigstens einer Wicklung gewickelte Schraubenfeder mit zwei Enden aufweist, die mit ihrem einen Ende drehmomentübertragend mit einem ersten Getrieberad und mit ihrem zweiten Ende drehmomentübertragend mit einem zweiten Getrieberad koppelbar ist. Die wenigstens eine Wicklung ist dabei in Anlage mit einer Oberfläche des Stators. Bei dieser Ausführungsvariante der Erfindung ist bevorzugt vorgesehen, dass jedes der Getrieberäder jeweils wenigstens eine Klaue aufweist, die mit dem jeweils dem Getrieberad zugeordneten Ende der Schraubenfeder in drehmomentübertragenden Eingriff bringbar ist. Die Klauen dienen sozusagen zur kraft- und drehmomentübertragenden Kopplung des jeweiligen Getrieberads mit der zwischen diesen angeordneten Schraubenfeder. Die Schraubenfeder ist das Kraftübertragungselement, das eine Kraftübertragung von dem motorischen Antrieb zu der Spindel hin zulässt und in der entgegengesetzten Richtung blockiert. Dies wird gemäß einer Ausführungsvariante der Erfindung insbesondere dadurch erreicht, dass sich die Schraubenfeder bei einer Drehmomentübertragung vom motorischen Antrieb zu der Spindel bezüglich des gehäusefesten Stators etwas radial aufweitet, so dass sie sicher bei der Drehmomentübertragung auf dem Stator abgleitet, und dass sich die Schraubenfeder im Falle einer Drehmomentübertragung von der Spindel zum motorischen Antrieb bezüglich des gehäusefesten Stator radial zusammenzieht, wobei sie am gehäusefesten Stator radial derart angreift, dass sie eine Drehmomentübertragung sperrt. Beim Blockieren zieht sich die Schraubenfeder also um den gehäusefesten Stator herum zu und sorgt so in Folge der Umschlingung für starke Reibungskräfte, die schließlich eine weitere Bewegung und damit Drehmomentübertragung über die Schraubenfeder verhindern. Sie blockiert das Getriebe in diesem Zustand.

Wird die Kraftfahrzeugbremse in einer Ausführungsvariante sowohl als Betriebsbremse als auch als Feststellbremse eingesetzt, so kann es erforderlich sein, für die Funktion als Betriebsbremse in gewissem Rahmen eine Drehmomentübertragung von der Spindel zum motorischen Antrieb hin zuzulassen. Im Rahmen der Feststellbremsfunktion ist eine solche Drehmomentübertragung aber aus den genannten Gründen zu unterbinden. Dies bedeutet, dass für die Funktion als Betriebsbremse und für die Funktion als Feststellbremse sozusagen entgegengesetzte Anforderungen vorliegen. Die vorliegende Erfindung löst in einer Ausführungsvariante die Differenzierung zwischen Betriebsbremsfunktion und Feststellbremsfunktion durch Ausnutzen der der Tatsache, dass zur Aktivierung der Feststellbremse üblicherweise wesentlich höhere Momente bzw. Spannkräfte eingesetzt werden, als im Rahmen der Betriebsbremsfunktion. Je nach Größe bzw. Betrag die eingesetzten Spannkräfte kann also zwischen Betriebsbremsfunktion und Feststellbremsfunktion "umgeschaltet" werden. Konstruktiv wird dieses Umschalten dadurch erreicht, dass bei dieser Ausführungsvariante der Schlingfederkupplung ein Schaltelement zugeordnet ist, welches in einer ersten Schaltstellung eine Drehmomentübertragung von der Spindel zu dem motorischen Antrieb zulässt und bei Erreichen einer zweiten Schaltstellung die Schlingfederkupplung dazu veranlasst, eine Drehmomentübertragung von der Spindel zu dem motorischen Antrieb zu blockieren. Dieses Schaltelement schaltet in Abhängigkeit von der einwirkenden Spannkraft. Dabei ist es erfindungsgemäß möglich, dass das Schaltelement wenigstens ein elastisches Deformationselement umfasst. Das wenigstens eine Deformationselement erlaubt im Rahmen eines bestimmten Deformationsgrades eine Kraftübertragung in beiden Richtungen zwischen motorischem Antrieb und Spindel. Ab einer bestimmten spannkraftbedingten Deformation erreicht das wenigstens eine Deformationselement die zweite Schaltstellung, in der dann eine Kraftübertragung vom motorischen Antrieb zur Spindel hin weiterhin möglich ist, in der entgegengesetzten Richtung aber blockiert wird. Insbesondere kann dabei vorgesehen sein, dass das Schaltelement seine erste oder zweite Schaltstellung nach Maßgabe einer zwischen dem ersten Getrieberad und dem zweiten Getrieberad auf die Schlingfeder wirkenden Spannkraft einnimmt.

Die Erfindung sieht vor, dass die Getriebeanordnung einen Planetengetriebemechanismus aufweist. Ferner kann in diesem Zusammenhang erfindungsgemäß vorgesehen sein, dass der motorische Antrieb einen Elektromotor aufweist, dessen Ausgangswelle ein Sonnenrad des Planetengetriebemechanismus aufweist, wobei ein Hohlrad des Planetengetriebemechanismus gehäusefest angeordnet ist, und wobei Planetenräder des Planetengetriebemecha nismus an einem im Gehäuse drehbar gelagerten Planetenträger drehbar gelagert sind. Dabei ist es erfindungsgemäß möglich, dass die Selbsthemmungsvorrichtung in ein Sonnenrad des Planetengetriebemechanismus integriert ist.

Die Erfindung wird im Folgenden beispielhaft anhand der folgenden Figuren erläutert. Es stellen dar:
- Fig. 1: eine räumliche Außenansicht für eine Aktuatorbaugruppe zur Erläuterung der technischen Hintergründe der erfindungsgemäßen Kraftfahrzeugbremse;
- Fig. 2: eine achsenthaltende Schnittansicht durch die Aktuatorbaugruppe der Kraftfahrzeugbremse gemäß Figur 1;
- Fig. 3: eine freigeschnittene Ansicht des Elektromotors, der Getriebeanordnung und der Spindel;
- Fig. 4: eine Explosionsansicht zur Erläuterung der Schlingfederkupplung;
- Fig. 5: eine achsorthogonale Schnittansicht der Anordnung aus zwei Getrieberädern mit Schlingfederkupplung;
- Fig. 6: eine schematische Ansicht für eine erste Ausführungsvariante der Erfindung, bei der die Selbsthemmungsvorrichtung zwischen der ersten und zweiten Getriebestufe angeordnet ist; und
- Fig. 7: eine schematische Ansicht für eine zweite Ausführungsvariante der Erfindung, bei der die Selbsthemmungsvorrichtung zwischen dem motorischen Antrieb und der ersten Getriebestufe angeordnet ist.

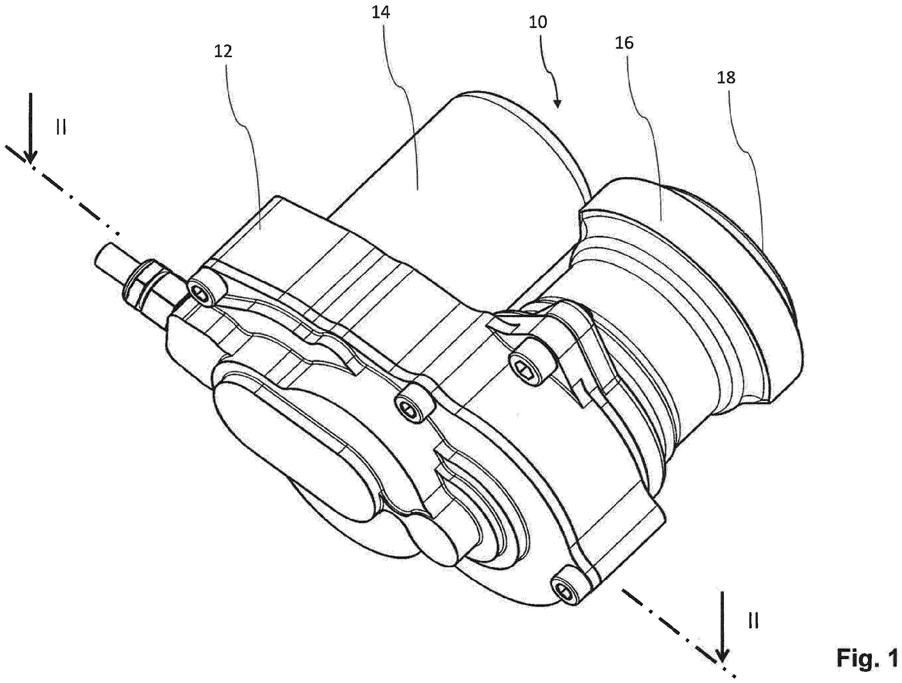

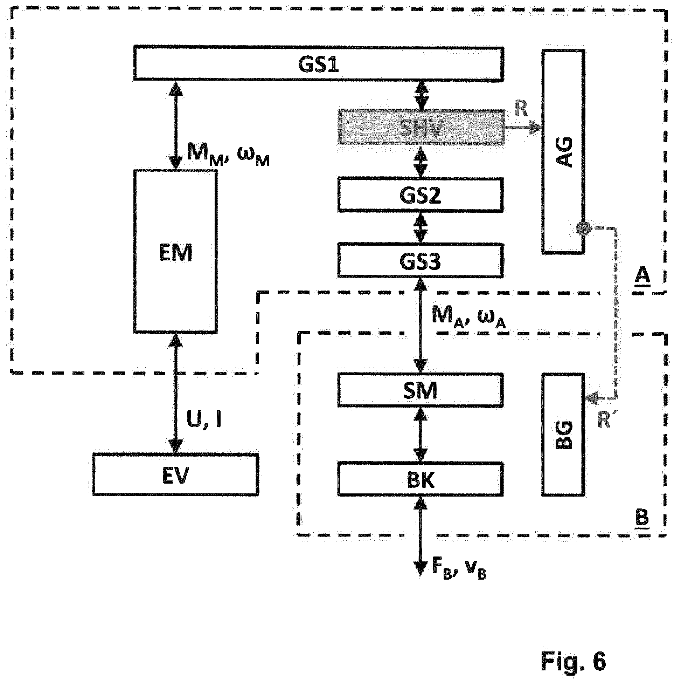

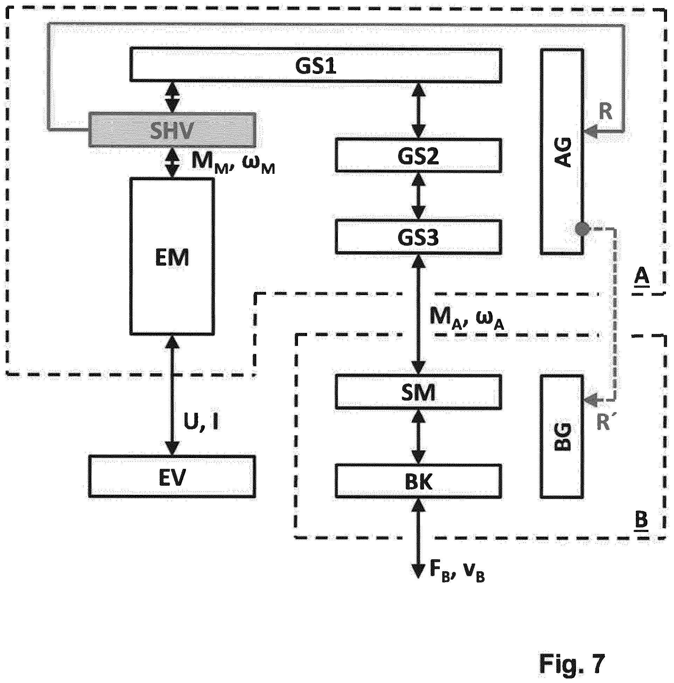

In Figur 1 ist eine Aktuatorbaugruppe einer Kraftfahrzeugbremse in räumlicher Darstellung gezeigt und allgemein mit 10 bezeichnet. Die Figuren Ziffer 1-5 dienen zur Erläuterung der technischen Hintergründe der Erfindung. Die eigentlichen beispielhaften Ausführungsformen werden mit Bezug auf Figuren 6 und 7 beschrieben.

Figur 1 zeigt ein Gehäuse 12, in dem eine Getriebeanordnung angeordnet ist, sowie ein Teilgehäuse 14 zur Unterbringung eines Antriebsmotors und ein weiteres Teilgehäuse 16, in dem ein verschiebbarer Kolben 18 angeordnet ist, mit dem ein nicht gezeigter Bremsbelag in einer Bremseinheit einer Kraftfahrzeugbremse bremswirksam verschoben werden kann. Die in Figur 1 gezeigte Aktuatorbaugruppe 10 der erfindungsgemäßen Kraftfahrzeugbremse lässt sich in üblicher Weise beispielsweise in eine Schwimmsattelbremse einbauen. Hierzu wird auf das Dokument WO 2009/046899 A1 verwiesen, wo eine solche Einbausituation exemplarisch gezeigt ist. Dieses Dokument ist eine Anmeldung der vorliegenden Anmelderin. Da es im Folgenden auf die Aktuatorbaugruppe bestehend aus motorischem Antrieb und Verlagerungsmechanik zur Verlagerung des Bremsbelags ankommt, konzentriert sich die folgende Beschreibung auf diese Komponenten. Auch in den Figuren sind nur entsprechende Komponenten gezeigt.

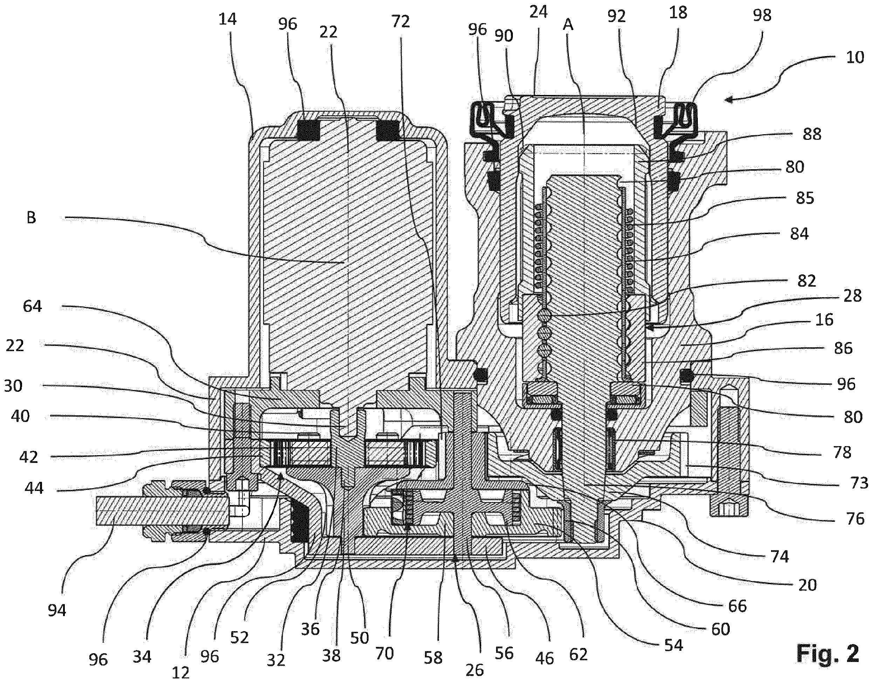

Figur 2 zeigt eine achsenthaltende Querschnittansicht durch die in Figur 1 gezeigte Antriebseinheit 10. Man erkennt, dass das Gehäuse 12 mehrteilig aufgebaut ist und sich aus einem Gehäusedeckel 20, dem Teilgehäuse 14 zur Aufnahme eines Elektromotors 22 und dem Teilgehäuse 16 zur verlagerbaren Aufnahme des Kolbens 18 zusammensetzt. Der Kolben 18 ist entlang der Längsachse A in an sich bekannter Weise hydraulisch und elektromechanisch verlagerbar. Seine exponierte Oberfläche 24 wirkt in üblicher Weise mit einer nicht gezeigten Bremsbelaganordnung zum Erzielen einer Bremswirkung zusammen. Eine hydraulische Verlagerung erfolgt in bekannter Weise während der Betriebsbremsung. Eine elektromechanische Verlagerung erfolgt zum Aktivieren und Lösen der Feststellbremsfunktion.

Im Folgenden soll im Detail auf die elektromechanische Verlagerungsmechanik eingegangen werden.

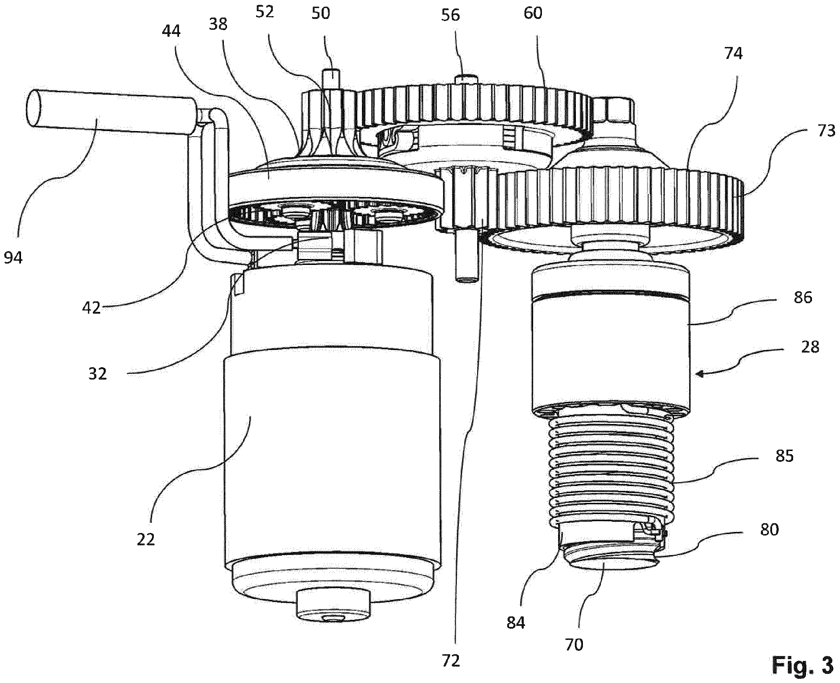

Die Verlagerungsmechanik umfasst eine Getriebeanordnung 26 sowie eine Mutter-Spindel-Anordnung 28. Beide Grundkomponenten der Verlagerungsmechanik sind zusammen mit dem Elektromotor 22 freigeschnitten in Figur 3 dargestellt. Die Getriebeanordnung 26 dient dazu, um eine Drehbewegung des Elektromotors 22 in eine entsprechende Linearbewegung des Kolbens 18 entlang der Längsachse A umzusetzen. Im Einzelnen weist der Elektromotor 22 eine sich entlang der Motorlängsachse B erstrecken der Motorausgangswelle 30 auf. Diese ist mit einem Zahnrad 32 drehfest gekoppelt. Das Zahnrad 32 dient als Sonnenrad eines Planetengetriebes 34. Das Zahnrad 32 weist in seinem motorfernen Ende einen Lagerzapfen 36 auf. Auf diesem Lagerzapfen 36 ist drehbar ein Planetenträger 38 gelagert, der seinerseits wieder mehrere Lagerzapfen 40 aufweist. Die Lagerzapfen 40 dienen dazu, um Planetenräder 42 zu lagern, die mit dem Zahnrad 32 in kämmendem Eingriff stehen.

Radial außerhalb der Planetenräder 42 ist ein Hohlrad 44 gehäusefest angeordnet. Hierzu dient ein weiteres Gehäuseteil 46. Der Planetenträger 38 ist in diesem Gehäuseteil 46 mit einem Lagerzapfen 50 drehbar gelagert. Er weist zwischen den Lagerzapfen 40 und seinem Lagerzapfen 50 eine Außenverzahnung 52 auf. Diese Außenverzahnung 52 kämmt mit einem ersten Getrieberad 54, das auf einem gehäusefesten Stator 56 über einen radial inneren Lageabschnitt 58 drehbar gelagert ist und an seinem Außenumfang eine Außenverzahnung 60 aufweist. Das Getrieberad 54 ist topfartig ausgebildet. In seinem Inneren erstreckt sich ein Reibradabschnitt 62, der an dem Stator 56 angeformt und damit ebenfalls drehfest im Gehäuse 12, insbesondere drehfest am Gehäuseteil 46 und einem weiteren Gehäuseteil 64, angebracht ist, beispielsweise durch Einpressen. Auf dem Stator 56 ist ein zweites Getrieberad 66 drehbar gelagert. Dieses zweite Getrieberad 66 kann über eine Schlingfederkupplung 70 zur Drehmomentübertragung mit dem ersten Getrieberad 54 gekoppelt werden. Hierauf wird im Folgenden noch im Detail eingegangen. Das zweite Getrieberad 66 weist an seinem vom ersten Getrieberad 54 abgewandten Abschnitt eine Außenverzahnung 72 auf. Diese kämmt mit einer Außenverzahnung 73 eines Abtriebszahnrads 74, das drehfest auf einer Spindel 76 der Mutter-Spindel-Anordnung 28 gelagert ist.

Man erkennt in Figur 2, dass die Spindel 76 über ein Radialnadellager 78 und ein Axiallager in dem Gehäuseteil 16 gelagert ist. Die Spindel 76 weist an ihrem Außenumfang eine Gewindeformation 80 auf, in der Wälzkörper 82 aufgenommen sind. Die Wälzkörper 82 sind in einem Wälzkörperkäfig 84 gehalten, der über eine Schraubenfeder 85 in seine in Figur 2 und 3 gezeigte Ausgangsstellung vorgespannt ist. Auf den Wälzkörpern 82 lagert eine Mutter 86, die bei einer Drehbewegung der Spindel 76 in üblicher Weise eine Linearbewegung innerhalb des Gehäuseteils 16 ausführt. Die Mutter 86 ist fest mit einem Koppelelement 88 verbunden, das sich bei der Bewegung der Mutter 86 entsprechend mit verlagert. Das Koppelelement 88 weist an seinem freien Ende eine konische Koppelfläche 90 auf, die mit einer korrespondierenden Kolbenfläche 92 im Inneren des Kolbens des 18 in Eingriff bringbar und zusammen dem Kolben 18 zur Verlagerung desselben und damit zur Verlagerung des nicht gezeigten Bremsbelags verschiebbar ist.

Ferner erkennt man in Figur 2 ein Anschlusskabel 94, sowie verschiedene Dichtungen 96 um die Gehäuseteile zueinander und daran angeschlossene Komponenten abzudichten bzw. gedichtet zu führen. Schließlich erkennt man noch dass der Kolben 18 mit einem Balg 98 gedichtet ist.

In den Figuren 2 und 3 erkennt man Einzelheiten der Verlagerungsmechanik.

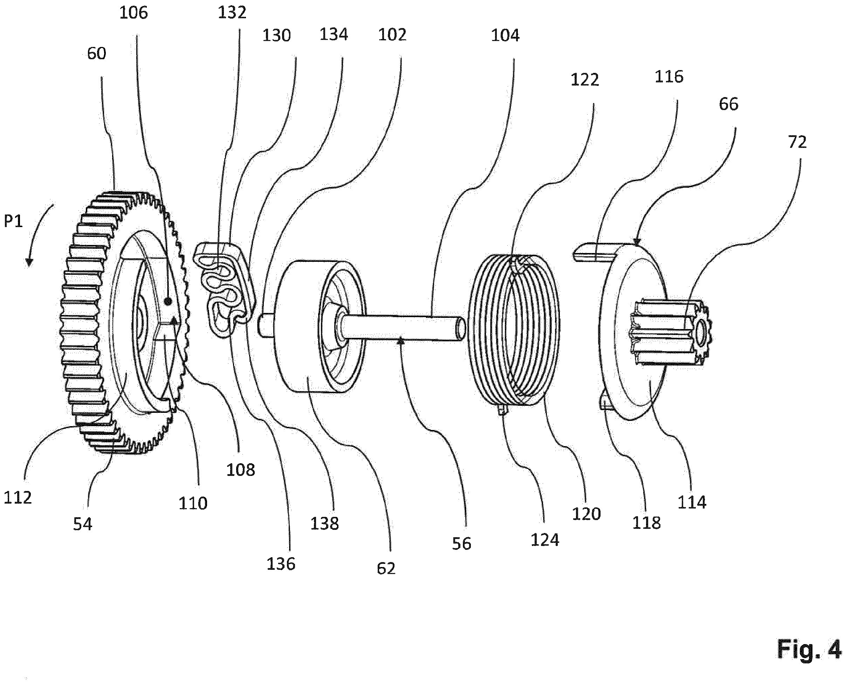

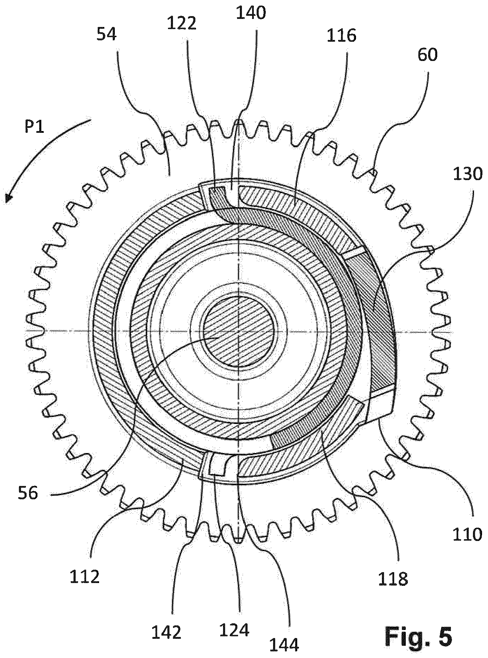

Wendet man sich nun den Figuren 4 und 5 zu, so erkennt man darin den Aufbau und die einzelnen Komponenten der Schlingfederkupplung 70. Im Inneren der Schlingfederkupplung 70 ist der Stator 56 mit seinem Reibradabschnitt 62 vorgesehen. Wie bereits ausgeführt, ist der Stator 56 gehäusefest und damit unverdrehbar über zwei Lagerzapfen 102, 104 im Gehäuse gelagert. Auf dem Stator 56 lagert das erste Getrieberad 54. Dieses weist an seinem Außenumfang die Außenverzahnung 60 auf und ist im Inneren mit einem Hohlraum 106 versehen. Der Hohlraum 106 ist mit einer seitlichen Tasche 108 mit Anlagefläche 110 versehen. Ferner erstreckt sich von einer Seitenfläche des ersten Getrieberads 54 aus eine kreissegmentförmige Klaue 112.

Das zweite Getrieberad 66 weist neben seiner Außenverzahnung 72 eine plattenartige Struktur 114 auf, an der eine erste Klaue 116 und eine zweite Klaue 118 angeordnet sind, die sich in axialer Richtung erstrecken. Ferner erkennt man in Figur 4 eine Schraubenfeder 120 mit abgekröpften Enden 122 und 124. Die Schraubenfeder 120 ist derart dimensioniert, dass sie im entspannten Zustand an der Außenumfangsfläche des Reibradabschnitts 62 satt anliegt, jedoch auf dieser abgleiten kann. Zur Montage wird die Schraubenfeder 120 auf den Reibradabschnitt 62 aufgesteckt. Diese Anordnung wird im Hohlraum 106 aufgenommen. Die beiden abgekröpften Enden 122 und 124 erstrecken sich in radialer Richtung so weit nach außen, dass sie, wie im Folgenden im Detail erläutert werden wird, mit den Klauen 112, 116, 118 in Eingriff bringbar sind, ohne dass sie an den den Hohlraum 106 begrenzenden Flächen entlangreiben oder kratzen.

Ferner erkennt man in Figur 4 eine Formfeder 130 mit mehreren gewundenen Schlingen 132, die sich entlang eines Basisstrangs 134 erstrecken. Die beiden Enden 136, 138 greifen ineinander. Die gewundenen Schlingen 132 lassen sich bei Einwirkung einer Kraft F aus ihrer entspannten Stellung in eine komprimierte Stellung komprimieren. Die Formfeder 130 ist in der Tasche 108 angeordnet und liegt mit ihrer letzten Schlinge an der Anlagefläche 110 an.

Man erkennt den zusammengebauten Zustand der Schlingfederkupplung 70 in Figur 5, wobei zu ergänzen ist, dass das abgekröpfte Federende 122 zwischen der Klaue 116 und der Klaue 118 in dem Zwischenraum 140 aufgenommen ist.

Generell wird die vorstehend beschriebene Kraftfahrzeugbremse mit ihrer vorstehend beschriebenen Aktuatorbaugruppe vornehmlich zur Aktivierung einer Feststellbremsfunktion eingesetzt. Dies bedeutet, dass im Betriebsbremsfall der Kolben 18 üblicherweise hydraulisch derart verlagert wird, dass er sich aus dem Gehäuseteile 16 heraus verlagert. Gleichermaßen muss es möglich sein, dass sich der Kolben 18 wieder bei Freigabe des Motors 22 zum Lösen der Bremse im Betriebsbremsfall teilweise oder ganz in seine Ausgangsposition gemäß Figur 2 zurück verlagert. Dies geschieht in der Regel allein durch die Wirkung einer Entspannung am nicht gezeigten Bremsbelags sowie unter Vermittlung der Rückstellfeder 85, ohne dass hierzu ein motorischer Antrieb vom Elektromotor 42 erforderlich wäre. Für den Betriebsbremsfall sei angemerkt, dass relativ geringe Spannkräfte erforderlich sind.

In einer Feststellbremssituation wird der Kolben 18 mit relativ großer Spannkraft zur Erzeugung einer Feststellbremswirkung verlagert und soll in dieser Position dauerhaft gehalten werden, um das Kraftfahrzeug sicher festzustellen. Die erreichte Kolbenposition ist zur Beibehaltung der Feststellbremswirkung unbedingt aufrechtzuerhalten und es ist zu vermeiden, dass sich der Kolben 18 im Laufe der Zeit durch Setzvorgänge in der Getriebeanordnung 26 zurück verlagert. Erst dann, wenn eine aktive Ansteuerung über den Motor 22 erfolgt mit der die Feststellbremse aktiv gelöst werden soll, kann sich der Kolben 18 wieder in seine Ausgangsposition gemäß Figur 2 zurück verlagern.

Es muss also unterschieden werden zwischen der Betriebsbremssituationen und der Feststellbremssituation, wobei je nach aktuellem Zustand der Bremse ein Kraftfluss vom Kolben 16 zum Motor 22 hin zuzulassen oder zu unterbinden ist. Um dieser Anforderung gerecht zu werden, wird die Schlingfederkupplung 70 in der gezeigten Weise eingesetzt. Die Schlingfederkupplung 70 funktioniert in Wechselwirkung mit den beiden Getrieberädern 54 und 66 wie folgt:
- Zunächst sei der Kraftfluss vom motorseitigen Getrieberad 54 aus betrachtet, d.h. der Fall, bei dem der Motor 22 angetrieben wird und das Getrieberad 54 unter Vermittlung des Planetengetriebes 34 drehantreibt. Hier gibt es zwei Drehrichtungen, nämlich die Drehrichtung des Getrieberads 54 im Gegenuhrzeigersinn zum Spannen der Bremse (Spannen der Betriebsbremse und der Feststellbremse) und die Drehrichtung des Getrieberad 54 im Uhrzeigersinn zum aktiven Lösen der Bremse (Lösen der Feststellbremse).
- Bei einer Drehung des ersten Getrieberads 54 im Gegenuhrzeigersinn entsprechend Pfeil P1 - dies entspricht einer Bewegung zum Verlagern des Kolbens 18 aus dem Gehäuse 16 heraus, d.h. zum Aktivieren der Bremse über den Motor 22 sowohl in einer Betriebsbremssituation als auch in einer Feststellbremssituation - wird die Formfeder 130 über die Anlagefläche 110 gegen die Klaue 116 verschoben. Je größer der Widerstand wird, den die Klaue 116 einer solchen Verschiebung entgegensetzt (d.h. bei steigenden Spannkräften), desto stärker wird die Formfeder 130 komprimiert. Die Schraubenfeder 120 bleibt bei dieser Betätigung im Gegenuhrzeigersinn entsprechend Pfeil P1 wirkungslos, weil ihre Federenden sich frei in dem Spielraum zwischen den Klauen 112, 116 und 118 bewegen können und sie auf dem Reibradabschnitt 62 abgleitet.
- Treten größere Spannkräfte auf, wie dies bei der Aktivierung der Feststellbremse der Fall ist, wenn über den Kolben 18 die Bremsbeläge stark an die Bremsscheibe gedrückt werden müssen, so wird die Formfeder 130 stärker komprimiert. Wenn die Formfeder 130 in Folge einer Drehung entsprechend Pfeil P1 stärker komprimiert wird bedeutet dies, dass sich nun das erste Getrieberad 54 relativ zum zweiten Getrieberad 56 entsprechend der Komprimierung der Formfeder 130 verlagert hat. Die maximale Relativverlagerung ist dadurch bestimmt, dass sich die Klaue 112 mit ihrer Stirnseite 142 unter Vermittlung des abgekröpften Endes 124 an die Klaue 118 und deren Stirnseite 144 anlegt. Ist dieser Zustand erreicht, so ist die Formfeder 130 maximal komprimiert und es wird jede weitere Drehung des Elektromotors 22 über die Getriebeanordnung 26 zur Mutter-Spindel-Anordnung 28 zum weiteren Zuspannen der Feststellbremse übertragen.
- Ist die Feststellbremse zugespannt, so wirken aus der Spannkraft resultierende Reaktionskräfte auf das Getriebe zurück. Diese Reaktionskräfte, die über die Mutter-Spindel-Anordnung 28, das Abtriebszahnrad 74 und die Außenverzahnung 72 auf die Klauen 116 und 118 übertragen werden, versuchen die Klauen 116, 118 in ihre Ausgangsstellung zurückzudrängen, d.h. im Gegenuhrzeigersinn zu bewegen. Sobald aber die Klaue 116 versucht, in ihren Ausgangszustand zurückzukehren, d.h. sich im Gegenuhrzeigersinn zu bewegen, gelangt sie in Eingriff mit dem gekröpften Ende 122 der Schraubenfeder 120. In Folge dieses gegenseitigen Eingriffs wird unter der Bewegungstendenz der Klaue 116 im Gegenuhrzeigersinn die Schraubenfeder 120 um den Reibradabschnitt 62 zugezogen, so dass sich deren Schlingen verengen und an der Außenumfangsfläche des Reibradabschnitts 62 stärker angreifen. Dieses Umschlingen der Außenumfangsfläche des Reibradabschnitts 62 führt dazu, dass die Schraubenfeder 120 nicht weiter auf diese außen Umfangsfläche abgleiten kann, sondern sozusagen an dieser festhält. Demzufolge kann sich die Klaue 116 nicht in ihre Ausgangsstellung zurück bewegen. Die Feststellbremse bleibt aktiviert. Ein Setzvorgang ist damit ausgeschlossen.
- Zum Lösen der Feststellbremse ist wiederum eine Ansteuerung des Motors 22 erforderlich. Diese erfolgt derart, dass das Getrieberad 54 im Uhrzeigersinn gedreht wird. Bewegt sich das Getrieberad 54 im Uhrzeigersinn entsprechend Pfeil P2 - dies entspricht einer Bewegung zum Verlagern des Kolbens 18 in das Gehäuse 16 hinein, d.h. zum aktiven Lösen der Bremse über den Motor 22 beim Deaktivieren der Feststellbremse - so bewegt sich entsprechend die Klaue 112 ebenfalls im Uhrzeigersinn und löst die Spannung an der Formfeder 130. Darüber hinaus wird die Schraubenfeder 120 gelöst und gibt die Klaue 118 frei. Diese kann sich - der Klaue 112 folgend - zurück bewegen, was unter der Wirkung der Rückstellfeder 85 erfolgt.

Die Schlingfederkupplung 70 hat also die generelle Wirkung, dass sie für die Feststellbremsfunktion sicherstellt, dass eine Drehmomentübertragung vom Motor zur Mutter-Spindel-Anordnung auch bei hohen Spannkräften erfolgt und dass Setzeffekte oder ein unbeabsichtigtes Lösen der Feststellbremse durch die Wirkung der Schlingfederkupplung 70, insbesondere durch die Wirkung der sich dann zuziehenden und fest auf der Außenumfangsfläche des Reibradabschnitt 62 angreifenden Schraubenfeder 120, verhindert wird.

Soll lediglich eine Feststellbremsfunktion realisiert werden, wobei die Betätigung im Betriebsbremsfall rein hydraulisch erfolgt, so ist die Formfeder 130 eine Option und kann weggelassen werden.

Soll mit der Bremse sowohl eine Betriebsbremsfunktion also eine Feststellbremsfunktion unter elektromechanischer Aktivierung vorgesehen sein, so wird aber zusätzlich die Formfeder 130 eingesetzt, die sich in Abhängigkeit von dem aktuellen Spannungszustand mehr oder weniger stark deformiert. Bei geringen Spannkräften, wie sie üblicherweise während einer Betriebsbremsung auftreten, wird die Formfeder 130 überhaupt nicht oder nur in geringem Maße deformiert, so dass sie sozusagen die Schraubenfeder 120 (Schlingfeder) inaktiv hält. Dadurch kann eine Selbsthemmung im Getriebe für die Betriebsbremsfunktion unterbunden werden. Es ist dann ein Kraftfluss durch das Getriebe in beide Richtungen zwischen motorischem Antrieb und Mutter-Spindel-Anordnung möglich. Erst wenn die Formfeder 130 hinreichend stark komprimiert ist, wird sozusagen die Schraubenfeder 120 (Schlingfeder) in ihrer Funktion aktiv und blockiert einen Kraftfluss durch das Getriebe von der Mutter-Spindel-Anordnung zum Elektromotor hin. Die Formfeder 130 ist also in dem gezeigten Ausführungsbeispiel erforderlich, weil beide Bremsfunktionen - Betriebsbremsfunktion und Feststellbremsfunktion - bereitgestellt werden sollen.

Ausgehend von diesem Verständnis für die Ausführungsform gemäß den Figuren 1 bis 5 setzt die Erfindung an einer Optimierung dieser Ausführungsform an. Ein erstes Ausführungsbeispiel der Erfindung ist schematisch in dem Blockschaltbild gemäß Figur 6 gezeigt.

Man erkennt darin, dass der von einer elektrischen Versorgungsquelle EV angetriebene Elektromotor EM über eine Ausgangswelle ein Motordrehmoment M_{M} und mit einer Motorwinkelgeschwindigkeit ω_{M} an eine erste Getriebestufe GS1 der Getriebeanordnung abgibt. Zwischen der ersten Getriebestufe GS1 und und der zweiten Getriebestufe GS2 ist die Selbsthemmungsvorrichtung SHV angeordnet, mit der Reaktionskräfte R an den Gehäuseabschnitt AG abgeleitet werden, der der Getriebeanordnung mit den einzelnen Getriebestufen GS1 bis GS3 und dem Elektromotor EM zugeordnet ist. Dieser Gehäuseabschnitt kann auch als Aktuator-Gehäuseabschnitt AG bezeichnet werden. Die Reaktionskräfte R lassen sich dann durch geeignete Kopplung des Aktuator-Gehäuseabschnitts AG und des nachfolgend näher erläuterten Gehäuseabschnitts der Bremse BG entsprechend dem strichlierten Pfeil R' auf den Gehäuseabschnitt der Bremse BG ableiten.

Der zweiten Getriebestufe GS2 ist eine weitere Getriebestufe GS3 nachgeschaltet, von der ausgehend ein Drehmoment M_{A} und mit einer Aktuatorwinkelgeschwindigkeit ω_{A} an die Bremse übertragen wird. Die Bremse umfasst eine Spindel-Mutter-Anordnung SM eines Kugelgewindetriebs und einen Bremskolben BK, von dem ausgehend die Bremsbetätigungskraft F_{B} mit einer Betätigungsgeschwindigkeit v_{B} auf die Bremsbeläge übertragen wird. Von diesem Bremskolben BK wirken Reaktionskräfte im Bremsfall zurück.

Die Besonderheit dieser Ausführungsform liegt darin, dass die Selbsthemmungsvorrichtung SHV derart angeordnet ist, dass die beiden Getriebestufen GS2 und GS3 zwischen dem Kugelgewindetrieb mit seiner Spindel-Mutter-Anordnung SM und der Selbsthemmungsvorrichtung SHV angeordnet ist. Dies macht es möglich, das Übersetzungsverhältnis der beiden Getriebestufen GS2 und GS3 als Untersetzung für die in einer Feststellbremssituation von dem Bremskolben BK rückwirkenden Reaktionskräfte auszunützen, so dass die letztendlich auf die Selbsthemmungsvorrichtung SHV wirkenden Reaktionskräfte deutlich reduziert sind. Dadurch kann die Selbsthemmungsvorrichtung SHV verhältnismäßig klein dimensioniert werden, was insbesondere Bauraum einspart. Ferner bietet diese Anordnung der Selbsthemmungsvorrichtung SHV Freiheiten bei der Gestaltung und Unterbringung der Selbsthemmungsvorrichtung SHV innerhalb der Getriebeanordnung.

Eine weitere Ausführungsform der Erfindung ist in Figur 7 gezeigt. Darin erkennt man, dass die Selbsthemmungsvorrichtung SHV zwischen dem Elektromotor EM und der ersten Getriebestufe GS1 angeordnet ist, so dass das Übersetzungsverhältnis aller dreier Getriebestufen GS1 bis GS3 als Untersetzung für die von dem Bremskolben BK rückwirkenden Reaktionskräfte ausgenutzt werden kann.

Die Vorteile der Erfindung liegen also in der Anordnung der Selbsthemmungsvorrichtung SHV innerhalb der Getriebeanordnung mit den einzelnen Getriebestufen GS1 bis GS3 relativ zu den eigentlichen Komponenten der Bremse, nämlich dem Kugelgewindetrieb (Spindel-Mutter-Anordnung SM). Durch diese Anordnung lassen sich Übersetzungen der Getriebestufen GS1 bis GS3 vorteilhaft ausnutzen, um die Reaktionskräfte zu reduzieren. Ferner bietet diese Anordnung größere Variabilität zur Bauraumeinsparung.

## Patentansprüche

1. Kraftfahrzeugbremse, insbesondere kombiniert hydraulisch und elektromechanisch betätigbare Kraftfahrzeugbremse, mit einer Aktuatorbaugruppe (10) umfassend:
- ein Gehäuse (12),
- ein relativ zu dem Gehäuse (12) verlagerbares Stellglied (18) zum hydraulischen oder elektromechanischen Verlagern eines Bremsbelags,
- einen motorischen Antrieb (22), der einen Elektromotor (EM) aufweist,
- eine zwischen dem motorischen Antrieb (22) und dem verlagerbaren Stellglied (18) angeordnete Verlagerungsmechanik,
- eine der Verlagerungsmechanik zugeordnete Getriebeanordnung (26), und
- eine separate Selbsthemmungsvorrichtung (SHV), die dazu ausgebildet ist, die Verlagerungsmechanik bei Bedarf zu blockieren,
wobei die Verlagerungsmechanik einen Kugelgewindetrieb (28) mit einer Spindel (76) und einer Mutter (86) aufweist, wobei wahlweise die eine Komponente von Spindel (76) und Mutter (86) drehantreibbar ist und die jeweils andere Komponente von Spindel (76) und Mutter (86) zur Verlagerung des Stellglieds (18) durch Drehantreiben einer Komponente von der Spindel (76) und Mutter (86) innerhalb des Gehäuses (12) linear verlagerbar ist, **gekennzeichnet dadurch, dass** die Getriebeanordnung (26) drei Getriebestufen (GS1, GS2, GS3) und einen Planetengetriebemechanismus (34) aufweist,
wobei eine Ausgangswelle (32) des Elektromotors (EM) ein Sonnenrad des Planetengetriebemechanismus (34) aufweist, wobei ein Hohlrad (44) des Planetengetriebemechanismus (34) gehäusefest angeordnet ist, und wobei Planetenräder (42) des Planetengetriebemechanismus (34) an einem im Gehäuse (12) drehbar gelagerten Planetenträger (38) drehbar gelagert sind,
und wobei die Selbsthemmungsvorrichtung (SHV) derart in oder an der Getriebeanordnung (26) angeordnet ist, dass wenigstens zwei Getriebestufen (GS2, GS3) zwischen dem Kugelgewindetrieb (28) und der Selbsthemmungsvorrichtung (SHV) angeordnet sind.

2. Kraftfahrzeugbremse nach Anspruch 1,
**dadurch gekennzeichnet, dass** die Selbsthemmungsvorrichtung (SHV) zwischen dem motorischen Antrieb (EM) und der Getriebeanordnung (26) angeordnet ist.

3. Kraftfahrzeugbremse nach Anspruch 1,
**dadurch gekennzeichnet, dass** die Selbsthemmungsvorrichtung (SHV) der dem motorischen Antrieb (EM) nächsten Getriebestufe (GS1) der Getriebeanordnung (26) nachgeschaltet ist.

4. Kraftfahrzeugbremse nach einem der vorangehenden Ansprüche,
**dadurch gekennzeichnet, dass** die Selbsthemmungsvorrichtung (SHV) derart angeordnet ist, dass die beim Blockieren der Verlagerungsmechanik auftretenden Reaktionskräfte mittelbar oder unmittelbar in das Gehäuse (12) ableitbar sind.

5. Kraftfahrzeugbremse nach Anspruch 4,
**dadurch gekennzeichnet, dass** die Selbsthemmungsvorrichtung (SHV) die beim Blockieren der Verlagerungsmechanik auftretenden Reaktionskräfte in einen der Getriebeanordnung (26) zugeordneten Gehäuseabschnitt ableitet, wobei dieser Gehäuseabschnitt kraftübertragend mit einem die Bremsbelaganordnung tragenden Gehäuseabschnitt verbunden ist.

6. Kraftfahrzeugbremse nach einem der vorangehenden Ansprüche,
**dadurch gekennzeichnet, dass** die Selbsthemmungsvorrichtung (SHV) mit einer Schlingfederkupplung (70) ausgebildet ist, die eine über Drehmomentübertragung von dem motorischen Antrieb (22) zu der Spindel (76) zulässt und zum Blockieren einer Drehmomentübertragung von der Spindel (76) zum motorischen Antrieb (22) ausgebildet ist.

7. Kraftfahrzeugbremse nach Anspruch 6,
**dadurch gekennzeichnet, dass** der Schlingfederkupplung (70) ein Schaltelement (130) zugeordnet ist, welches in einer ersten Schaltstellung eine Drehmomentübertragung von der Spindel (76) zu dem motorischen Antrieb (22) zulässt und bei Erreichen einer zweiten Schaltstellung die Schlingfederkupplung (70) dazu veranlasst, eine Drehmomentübertragung von der Spindel (76) zu dem motorischen Antrieb (22) zu blockieren.

## Claims

1. Motor vehicle brake, in particular motor vehicle brake which can be actuated hydraulically and electromechanically in a combined manner, with an actuator assembly (10) comprising:
- a housing (12),
- an actuator (18) which can be moved relative to the housing (12) for the hydraulic or electromechanical movement of a brake lining,
- a motorized drive (22) which has an electric motor (EM),
- a movement mechanism which is arranged between the motorized drive (22) and the movable actuator (18),
- a transmission arrangement (26) which is assigned to the movement mechanism, and
- a separate self-locking apparatus (SHV) which is configured to block the movement mechanism if required,
the movement mechanism having a ball screw drive (28) with a spindle (76) and a nut (86), it being possible selectively for the one component of spindle (76) and nut (86) to be driven rotationally and for the respective other component of spindle (76) and nut (86) to be moved in a linear manner within the housing (12) for the movement of the actuator (18) by way of rotational driving of one component of spindle (76) and nut (86), **characterized in that**
the transmission arrangement (26) has three transmission stages (GS1, GS2, GS3) and a planetary transmission mechanism (34),
an output shaft (32) of the electric motor (EM) having a sun gear of the planetary transmission mechanism (34), an internal gear (44) of the planetary transmission mechanism (34) being arranged fixedly on the housing, and planetary gears (42) of the planetary transmission mechanism (34) being mounted rotatably on a planetary carrier (38) which is mounted rotatably in the housing (12),
and the self-locking apparatus (SHV) being arranged in or on the transmission arrangement (26) in such a way that at least two transmission stages (GS2, GS3) are arranged between the ball screw drive (28) and the self-locking apparatus (SHV).

2. Motor vehicle brake according to Claim 1, **characterized in that** the self-locking apparatus (SHV) is arranged between the motorized drive (EM) and the transmission arrangement (26).

3. Motor vehicle brake according to Claim 1, **characterized in that** the self-locking apparatus (SHV) is connected downstream of that transmission stage (GS1) of the transmission arrangement (26) which is closest to the motorized drive (EM).

4. Motor vehicle brake according to one of the preceding claims,
**characterized in that** the self-locking apparatus (SHV) is arranged in such a way that the reaction forces which occur in the case of blocking of the movement mechanism can be dissipated indirectly or directly into the housing (12) .

5. Motor vehicle brake according to Claim 4, **characterized in that** the self-locking apparatus (SHV) dissipates the reaction forces which occur in the case of blocking of the movement mechanism into a housing section which is assigned to the transmission arrangement (26), the said housing section being connected in a force-transmitting manner to a housing section which supports the brake lining arrangement.

6. Motor vehicle brake according to one of the preceding claims,
**characterized in that** the self-locking apparatus (SHV) is configured with a wrap spring clutch (70) which permits a transmission of torque from the motorized drive (22) to the spindle (76) and is configured for blocking a transmission of torque from the spindle (76) to the motorized drive (22).

7. Motor vehicle brake according to Claim 6, **characterized in that** the wrap spring clutch (70) is assigned a switching element (130) which, in a first switching position, permits a transmission of torque from the spindle (76) to the motorized drive (22) and, in the case of a second switching position being reached, causes the wrap spring clutch (70) to block a transmission of torque from the spindle (76) to the motorized drive (22).

## Revendications

1. Frein de véhicule automobile, notamment frein de véhicule automobile actionnable hydrauliquement et électromécaniquement de manière combinée, muni d'un module d'actionneur (10) comprenant :
- un boîtier (12),
- un organe de commande (18) déplaçable par rapport au boîtier (12), pour le déplacement hydraulique ou électromagnétique d'une garniture de frein,
- un entraînement motorisé (22), qui comprend un moteur électrique (EM),
- un système mécanique de déplacement agencé entre l'entraînement motorisé (22) et l'organe de commande déplaçable (18),
- un agencement de transmission (26) associé au système mécanique de déplacement, et
- un dispositif de blocage automatique séparé (SHV), qui est configuré pour bloquer le système mécanique de déplacement au besoin,
le système mécanique de déplacement comprenant une vis d'entraînement à billes (28) munie d'une broche (76) et d'un écrou (86), au choix un composant parmi la broche (76) et l'écrou (86) pouvant être entraîné en rotation et l'autre composant respectif parmi la broche (76) et l'écrou (86) pouvant être déplacé linéairement à l'intérieur du boîtier (12) pour le déplacement de l'organe de commande (18) par entraînement en rotation d'un composant parmi la broche (76) et l'écrou (86), **caractérisé en ce que**
l'agencement de transmission (26) comprend trois étages de transmission (GS1, GS2, GS3) et un mécanisme de transmission planétaire (34),
un arbre de sortie (32) du moteur électrique (EM) comprenant une roue solaire du mécanisme d'entraînement planétaire (34), une couronne (44) du mécanisme d'entraînement planétaire (34) étant agencée de manière fixe par rapport au boîtier, et des satellites (42) du mécanisme d'entraînement planétaire (34) étant montés de manière rotative sur un porte-satellites (38) monté de manière rotative dans le boîtier (12),
et le dispositif de blocage automatique (SHV) étant agencé dans ou sur l'agencement de transmission (26) de telle sorte qu'au moins deux étages de transmission (GS2, GS3) sont agencés entre la vis d'entraînement à billes (28) et le dispositif de blocage automatique (SHV).

2. Frein de véhicule automobile selon la revendication 1, **caractérisé en ce que** le dispositif de blocage automatique (SHV) est agencé entre l'entraînement motorisé (EM) et l'agencement de transmission (26).

3. Frein de véhicule automobile selon la revendication 1, **caractérisé en ce que** le dispositif de blocage automatique (SHV) est raccordé en aval de l'étage de transmission (GS1) de l'agencement de transmission (26) suivant l'entraînement motorisé (EM).

4. Frein de véhicule automobile selon l'une quelconque des revendications précédentes, **caractérisé en ce que** le dispositif de blocage automatique (SHV) est agencé de telle sorte que les forces de réaction qui se produisent lors du blocage du système mécanique de déplacement peuvent être détournées indirectement ou directement dans le boîtier (12).

5. Frein de véhicule automobile selon la revendication 4, **caractérisé en ce que** le dispositif de blocage automatique (SHV) détourne les forces de réaction qui se produisent lors du blocage du système mécanique de déplacement dans une section de boîtier associée à l'agencement de transmission (26), cette section de boîtier étant reliée d'une manière transférant les forces avec une section de boîtier portant l'agencement de garniture de frein.

6. Frein de véhicule automobile selon l'une quelconque des revendications précédentes, **caractérisé en ce que** le dispositif de blocage automatique (SHV) est configuré avec un accouplement à ressort enroulé (70), qui permet un transfert de couple de l'entraînement motorisé (22) à la broche (76) et est configuré pour le blocage d'un transfert de couple de la broche (76) à l'entraînement motorisé (22).

7. Frein de véhicule automobile selon la revendication 6, **caractérisé en ce qu'**un élément de commutation (130) est associé à l'accouplement à ressort enroulé (70) qui, dans une première position de commutation, permet un transfert de couple de la broche (76) à l'entraînement motorisé (22) et, lorsqu'une deuxième position de commutation est atteinte, amène l'accouplement à ressort enroulé (70) à bloquer un transfert de couple de la broche (76) à l'entraînement motorisé (22).
